# EUROPÄISCHE PATENTSCHRIFT

(11) **EP 1 287 479 B1**
(45) Veröffentlichungstag und Bekanntmachung des Hinweises auf die Patenterteilung: **16.06.2004**
(21) Anmeldenummer: 01935968.6
(22) Anmeldetag: 14.04.2001
(51) Int. Cl.: G06K 7/00, G07F 7/10

(54) **BETRIEB EINES SICHERHEITSMODULS IN EINEM KARTENLESER**
OPERATION OF A SECURITY MODULE IN A CARD READER
UTILISATION D'UN MODULE DE SECURITE DANS UN LECTEUR DE CARTES

(30) Priorität: 09.05.2000 DE 10022314
(43) Veröffentlichungstag der Anmeldung: 05.03.2003
(73) Patentinhaber: Wincor Nixdorf International GmbH, 33106 Paderborn (DE)
(72) Erfinder: NEUBAUER, Lutz, 33181 Bad Wünnenberg (DE)
(86) Internationale Anmeldenummer: PCT/DE2001/001465
(87) Internationale Veröffentlichungsnummer: WO 2001/086580

(56) Entgegenhaltungen:
- WO-A-97/10562
- RANKL WOLFGANG, EFFING WOLFGANG: "Handbuch der Chipkarten" 1999 , CARL HANSER VERLAG , MÜNCHEN WIEN XP002174265 ISBN: 3-446-21115-2 Seite 595 -Seite 612

## Beschreibung

### Technisches Gebiet

Die Erfindung betrifft die Ablaufsteuerung in Kartenlesern für Magnet- oder Chipkarten, in denen ein Sicherheitsmodul vorgesehen ist.

### Stand der Technik

In vielen Bereichen, insbesondere in Selbstbedienungsgeräten wie Geldausgabeautomaten, werden Karten im Scheckkarten bzw. Kreditkarten-Format benutzt, die magnetisch codierte Spuren oder in die Karte eingelassene elektronische Schaltungen aufweisen. Letzte Karten werden gemeinhin als Chipkarten bezeichnet. Bei der Benutzung dieser Karten werden Kartenleser benötigt, mittels derer die Chipkarten kontaktiert werden können oder die magnetisch codierte Information auf Magnetstreifenkarten gelesen werden kann.

Solche Kartenleser werden insbesondere auch dazu verwendet, die Identität einer ein Gerät benutzenden Person sicherzustellen. Hierzu ist auf den Karten ein Passwort, auch als PIN bezeichnet, codiert. Neben Chipkarten, die einen kryptographischen Prozessor enthalten, sind auch Chipkarten in Benutzung, bei denen das Passwort nicht ausgelesen werden, sondern nur intern verglichen werden kann. Bei letzteren muss dann das Passwort über die vorgesehene externe Schnittstelle des Kartenlesers im Klartext übermittelt werden. Ein solches Verfahren ist zum Beispiel in der WO 97 10562 A beschrieben. Im "Handbuch der Chipkarten" aus dem Carl Hanser Verlag wird von Wolfgang Rankl und Wolfgang Effing auf den Seiten 606 bis 608 ein mit einem Hauptschlüssel geladenes Sicherheitsmodul beschrieben, in welches über eine Tastatur- oder Kartenschnittstelle eine individuelle Karten- oder Chipnummern eingelesen wird, die das Sicherheitsmodul unter Verwendung kryptografischer Algorithmen zur Ableitung eines kartenindividuellen Schlüssels benutzt.

Aufgabe der Erfindung ist es daher, eine Lösung anzugeben, bei der das Passwort außerhalb des Kartenlesers nicht im Klartext benötigt wird.

### Darstellung der Erfindung

Die Erfindung verwendet die Erkenntnis, dass durch einen Sicherheitsmodul im Kartenleser die Aufgabe gelöst werden kann. Hierzu wird über die externe Schnittstelle ein verschlüsseltes Passwort gesendet, an den Sicherheitsmodul geschickt, dort entschlüsselt und, in der Regel umcodiert, direkt an die Chipkarte geschickt.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

### Kurzbeschreibung der Zeichnungen

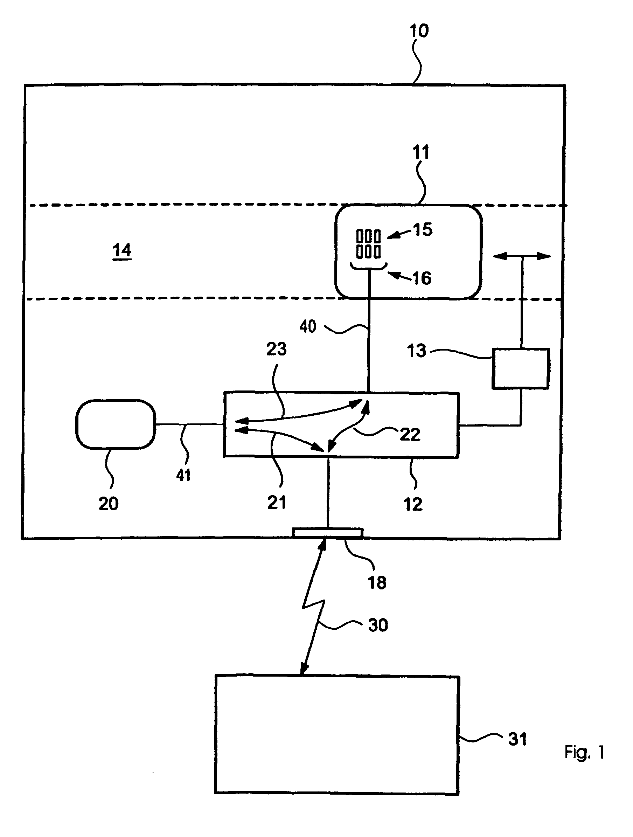

Es zeigen
- Fig. 1: eine schematische Darstellung von Komponenten eines Kartenlesers, in dem die Erfindung verwendbar ist.

### Beschreibung einer Ausführungsform der Erfindung

In Fig. 1 ist ein Kartenleser 10 schematisch dargestellt, in dem ein Karte, hier eine Chipkarte 11, in einem Führungskanal 14 bewegt und damit eingeführt und ausgegeben werden kann. Eine Steuerung 12 bewirkt diesen Vorgang über einen Antrieb 13. Die Chipkarte 11 hat Kontakte 15, die mit Gegenkontakten 16 angeschlossen werden. Dieser Vorgang wird von der Steuerung 12, ggf. zusammen mit dem Antrieb 13 und weiteren Mitteln, bewirkt.

Ferner umfasst der Kartenleser einen Sicherheitsmodul 20, der mit der Steuerung 12 verbunden ist. Dieser Sicherheitsmodul ist so gestaltet, dass ein Versuch, ihn zu öffnen, die gespeicherten Daten zerstört. Daher werden in einem solchen Sicherheitsmodul 20 insbesondere Schlüssel für symmetrische Verschlüsselungsverfahren gespeichert. Um den Schlüssel nicht preisgeben zu müssen, entschlüsselt der Sicherheitsmodul gegebenenfalls Daten, die über die Verbindung von der Steuerung 12 an ihn übertragen werden. Die Schnittstelle für einen solchen Sicherheitsmodul ist häufig dieselbe wie für eine Chipkarte. Er kann auch als Chipkarte ausgebildet sein, womit eine zweite entsprechende Kontaktstation notwendig ist. Bevorzugt wird jedoch eine Fassung für integrierte Schaltungen verwendet, welche zuverlässiger ist und weniger Platz beansprucht.

Ferner umfasst der Kartenleser eine Steuerschnittstelle 18, über die der Kartenleser gesteuert wird. Diese Steuerschnittstelle 18 ist in vielen Fällen als serielle Schnittstelle, bekannt unter dem Kürzel 'V24', ausgebildet. In Fig. 1 ist eine übergeordnete Steuerung 31 mit einer Datenübertragungsverbindung 30 skizziert, die diese Steuerschnittstelle 18 bedient.

Ein solcher Kartenleser kann auch alternativ Karten mit Magnetspur lesen, was in Fig. 1 nicht dargestellt ist. Man denke sich die Kontakteinheit 16 hierfür als Magnetlesekopf.

Das erfindungsgemäße Verfahren wird beispielsweise wie folgt angewendet:

Eine Chipkarte 11 eines Kunden sei durch die Kontaktstation 16 angeschlossen. Die Chipkarte 11 enthält ein gespeichertes Passwort, im Bankenumfeld als PIN bezeichnet. Dieses ist zwar nicht auslesbar; es ist jedoch vorgesehen, dass das Passwort im Klartext an die Chipkarte 11 geschickt wird und diese dann die Überprüfung auf Gleichheit durchführt.

Bei den bislang bekannten Kartenlesern muss daher das Passwort im Klartext an die Steuerschnittstelle 18 gegeben werden, damit die Steuerung 12 es an die Chipkarte weiterleitet. Dieser Weg ist durch den geschwungenen Doppelpfeil 22 im Innern der Steuerung 12 symbolisiert. Die Steuerschnittstelle 18 ist jedoch häufig eine standardisierte Schnittstelle, die relativ einfach anzapfbar ist. Außerdem wird die Steuerschnittstelle 18 häufig durch einen Rechner mit üblichem Betriebssystem bedient, der wiederum Ziel von Angriffen sein könnte.

Der Kartenleser verfügt über ein Sicherheitsmodul 20, welches insbesondere eine Entschlüsselung enthält. Dieser Sicherheitsmodul wird über die Steuerschnittstelle 18 bedient. Insbesondere wird ein verschlüsseltes Passwort von der übergeordneten Steuerung 31 an das Sicherheitsmodul 20 zwecks Entschlüsselung geschickt und das entschlüsselte Passwort von dem Sicherheitsmodul über die Steuerschnittstelle zurückgeschickt. Dieser Weg ist durch den geschwungenen Doppelpfeil 21 im Innern der Steuerung 12 symbolisiert. Die übergeordnete Steuerung 31 entnimmt das Passwort, bildet einen weiteren Auftrag an die Steuerung 12, um das entschlüsselte Passwort an die Chipkarte 11 zu senden.

Die Erfindung vermeidet die zweimalige Übertragung des Passworts über die Steuerschnittstelle 18, indem die Steuerung 12 so ausgebildet ist, dass das von dem Sicherheitsmodul 20 rückgegebene Ergebnis, in der Regel nach einer Umformatierung, direkt an die Chipkarte weitergegeben wird. Dieser Weg ist durch den geschwungenen Doppelpfeil 23 im Innern der Steuerung 12 symbolisiert.

An der Steuerschnittstelle liege ein Kommando an, welches das Passwort in verschlüsselter Form enthält. Dieses Kommando ist, in der Regel über ein Codefeld, dahingehend gekennzeichnet, dass es an den Sicherheitsmodul 20 zu leiten ist und das Ergebnis der Bearbeitung durch den Sicherheitsmodul nicht über die Steuerschnittstelle zurückgeschickt werden darf, sondern nur an die Chipkarte weitergeleitet werden darf. Das Ergebnis ist nun genau das entschlüsselte Passwort, welches an die Chipkarte geschickt wird. Die Chipkarte vergleicht mit dem in ihr gespeicherten Passwort und liefert eine Aussage, ob Übereinstimmung gegeben ist. Zur Unterstützung dieser Operation ist vorgesehen, in einem Vorbefehl, insbesondere durch Angabe von Position und Länge, anzugeben, wo in der Antwort des Sicherheitsmoduls das entschlüsselte Passwort zu extrahieren ist. In dem gleichen oder einem weiteren Vorbefehl wird der Steuerung mitgeteilt, in welchen codierten Befehl das extrahierte Passwort einzupassen ist. Dies kann durch Angabe einer davor und einer dahinter zu setzenden Zeichenkette erfolgen.

Die Verschlüsslung des Passworts erfolgt bevorzugt bereits in der Tastatureinheit, in die der Benutzer das Passwort bzw. die PIN eingibt. Damit ist der Bereich, in dem das Passwort unverschlüsselt sichtbar ist, auf das Innere der Tastatur und des Kartenlesers beschränkt. Die dazu notwendigen Einrichtungen sind bereits jetzt in den Tastaturen von Geldautomaten vorgesehen. Gegebenfalls kann auch eine Umschlüsselung erfolgen, wenn Tastatur und Sicherheitsmodul keinen gemeinsamen Schlüssel aufweisen. In diesem Fall ist die Steuerung des Geldautomaten mit einer Zentrale verbunden, die über beide Schlüssel in einer gesicherten Umgebung verfügt und mit dem Schlüssel der Tastatur entschlüsselt und innerhalb dieser sicheren Umgebung mit dem Schlüssel des Kartenlesers entschlüsselt.

Bei Kartenlesern mit Magnetspur kann die Erfindung insofern angewendet werden, als die mit der Magnetspur zu vergleichende Information verschlüsselt an den Kartenleser gesendet werden kann, von diesem entschlüsselt und dann direkt im Kartenleser mit den von der Magnetspur gelesenen Daten verglichen wird. Damit sind die Daten weniger einem Angriff ausgesetzt; ein Angreifer, der einen Angriff mittels einer größeren Menge von Magnetspurdaten plant, muss dann diese physisch in den Besitz bekommen. Insofern ist die Sicherheit zumindest graduell erhöht.

## Patentansprüche

1. Betriebsverfahren für einen Kartenleser (10), der enthält:
- eine Steuerung (12) mit einer Steuerschnittelle (18) für die Steuerung des Kartenlesers von außerhalb,
- eine Kartenschnittstelle (40) für betriebsmäßig auswechselbare Chipkarten, die mit der Steuerung (12) verbunden ist,
- ein Sicherheitsmodul (20) mit einer Modulschnittstelle (41), die mit der Steuerung (12) verbunden ist,
mit den Schritten:
- eine über die Steuerschnittstelle (18) eintreffende Autorisierungsanfrage wird in Form von Befehlssequenzen an das Sicherheitsmodul (20) weitergeleitet, welches daraufhin ein Zwischenergebnis erzeugt,
- das Zwischenergebnis des Sicherheitsmoduls (20) wird mit mittels über die Kartenschnittstelle (40) übertragener Daten durch den Rechner in der Chipkarte verglichen und ausgewertet,
- das Resultat der Auswertung wird über die Steuerschnittstelle (18) ausgegeben und von der übergeordneten Steuerung (31) weiterverarbeitet.

2. Verfahren nach Anspruch 1, wobei die Kartenschnittstelle (40) eine Schnittstelle für Chipkarten ist und die Prüfung dadurch erfolgt, dass das Zwischenergebnis direkt an die Chipkarte übermittelt wird.

3. Verfahren nach Anspruch 2, wobei in einem Vorbefehl über die Steuerschnittstelle (18) ein Datensatz an die Steuerung (12) geschickt wird, der mit dem Zwischenergebnis des Sicherheitsmoduls (20) kombiniert an die Chipkarte weitergeleitet wird.

4. Verfahren nach einem der Ansprüche 1 bis 3, wobei das Sicherheitsmodul (20) übertragene Daten entschlüsselt.

5. Kartenleser, der enthält:
- eine Steuerung (12) mit einer Steuerschnittelle (18) für die Steuerung des Kartenlesers (10) von außerhalb,
- eine Kartenschnittstelle (40) für betriebsmäßig auswechselbare Chipkarten (11), die mit der Steuerung (12) verbunden ist,
- einem Sicherheitsmodul (20) mit einer Modulschnittstelle (41), die mit der Steuerung (12) verbunden ist,
wobei der Kartenleser (10) ferner enthält:
- Mittel, die eine über die Steuerschnittstelle (18) eintreffende Autorisierungsanfrage in Form von Befehlssequenzen an das Sicherheitsmodul (20) weiterleiten, welches daraufhin ein Zwischenergebnis erzeugt,
- Mittel, die das Zwischenergebnis des Sicherheitsmoduls (20) mittels über die Kartenschnittstelle (40) übertragener Daten an den Rechner in der Chipkarte (11) zum Vergleich und zur Auswertung übertragen,
- Mittel, die das Resultat der Auswertung über die Steuerschnittstelle (18) zur Weiterverarbeitung von der übergeordneten Steuerung (31) ausgeben.

6. Verfahren zum Betrieb eines Selbstbedienungsgerätes, insbesondere eines Geldausgabeautomaten, mit
- einer Eingabetastatur und einer Eingabesteuerung, die einen Verschlüsseler und eine Tastaturschnittstelle umfasst,
- einem Kartenleser (10) und einer Kartenlesersteuerung (12) , die einen Entschlüsseler und eine Steuerschnittstelle (18) umfasst,
- eine Datenübertragungseinrichtung, über die eine Ausgabe auf der Tastaturschnittstelle zu der Steuerschnittstelle (18) übertragen wird,
mit den Schritten:
- ein auf der Eingabetastatur zum Zwecke der Autorisierung eingegebene Zeichenfolge wird von dem zur Eingabetastatur gehörigen Verschlüsseler verschlüsselt und ist in einer Ausgabe auf der Tastaturschnittstelle enthalten,
- die verschlüsselte Zeichenfolge wird von der Datenübertragungseinrichtung zu der Steuerschnittstelle (18) übertragen,
- die Kartenlesersteuerung (12) übergibt die verschlüsselte Zeichenfolge an den zum Kartenleser (10) gehörigen Entschlüsseler zur Entschlüsslung,
- die entschlüsselte Zeichenfolge wird mit den auf der Chipkarte (11) gespeicherten Daten einer in dem Kartenleser (10) befindlichen Karte verglichen und lediglich das Ergebnis der Überprüfung, das bei Datenübereinstimmung die Benutzung des Selbstbedienungsgerätes erlaubt, nicht jedoch die entschlüsselte Zeichenfolge über die Steuerschnittstelle (18) ausgegeben wird.

7. Verfahren nach Anspruch 4, wobei die entschlüsselte Zeichenfolge auf eine Chipkarte (11) übertragen und dort mit den in der Chipkarte (11) gespeicherten Daten verglichen wird.

8. Selbstbedienungsgerät, insbesondere Geldausgabeautomat, mit
- einer Eingabetastatur und einer Eingabesteuerung, die einen Entschlüsseler und eine Tastaturschnittstelle umfasst,
- einen Kartenleser (10) und eine Kartenlesersteuerung (12), die einen Entschlüsseler und eine Steuerschnittstelle (18) umfasst,
- einer Datenübertragungseinrichtung, über die eine Ausgabe auf der Tastaturschnittstelle zu der Steuerschnittstelle (18) übertragen wird,
ferner enthaltend:
- Mittel, die ein auf der Eingabetastatur zum Zwecke der Autorisierung eingegebene Zeichenfolge mittels des zur Eingabetastatur gehörigen Verschlüsseler verschlüsseln und die unverschlüsselte Zeichenfolge auf der Tastaturschnittstelle ausgeben,
- die verschlüsselte Zeichenfolge wird von der Datenübertragungseinrichtung zu der Steuerschnittstelle (18) übertragen,
- wobei die Kartenlesersteuerung (12) derart eingerichtet ist, dass sie die verschlüsselte zeichenfolge an den zum Kartenleser (10) gehörigen Entschlüsseler zur Entschlüsselung übergibt, damit die entschlüsselte Zeichenfolge mit den auf der Chipkarte (11) gespeicherten Daten einer in dem Kartenleser (10) befindlichen Karte verglichen wird und lediglich das Ergebnis der Überprüfung, das bei Datenübereinstimmung die Benutzung des Selbstbedienungsgerätes erlaubt, nicht jedoch die entschlüsselte Zeichenfolge über die Steuerschnittstelle (18) ausgegeben wird.

## Claims

1. Method of operation for a card reader (10) which contains:
- a controller (12) having a control interface (18) for controlling the card reader from the exterior,
- a card interface (40) for chip cards which can be interchanged under operational conditions, which is connected to the controller (12),
- a security module (20) having a module interface (41) which is connected to the controller (12),
having the following steps:
- an authorization request arriving via the control interface (18) is forwarded in the form of instruction sequences to the security module (20), which then produces an intermediate result,
- the intermediate result in the security module (20) is compared with data transmitted via the card interface (40), and is evaluated, by the computer in the chip card,
- the result of the evaluation is output via the control interface (18) and is processed further by the superordinate controller (31).

2. Method according to Claim 1, where the card interface (40) is an interface for chip cards, and the check is made by transmitting the intermediate result directly to the chip card.

3. Method according to Claim 2, where a preliminary instruction is used to send a data record to the controller (12) via the control interface (18), said data record being forwarded to the chip card in combination with the intermediate result from the security module (20).

4. Method according to one of Claims 1 to 3, where the security module (20) decrypts transmitted data.

5. Card reader which contains:
- a controller (12) having a control interface (18) for controlling the card reader (10) from the exterior,
- a card interface (40) for chip cards (11) which can be interchanged under operational conditions, which is connected to the controller (12),
- a security module (20) having a module interface (41) which is connected to the controller (12),
where the card reader (10) also contains:
- means which forward an authorization request arriving via the control interface (18) in the form of instruction sequences to the security module (20), which then produces an intermediate result,
- means which use data transmitted via the card interface (40) to transmit the intermediate result in the security module (20) to the computer in the chip card (11) for comparison and evaluation,
- means which output the result of the evaluation via the control interface (18) for further processing by the superordinate controller (31).

6. Method of operating a self-service appliance, particularly an automatic cash dispenser, having
- an input keypad and an input controller which comprises an encrypter and a keypad interface,
- a card reader (10) and a card reader controller (12) which comprises a decrypter and a control interface (18),
- a data transmission device which is used to transmit an output on the keypad interface to the control interface (18),
having the following steps:
- a character sequence which is input on the input keypad for the purpose of authorization is encrypted by the encrypter associated with the input keypad and is held in an output on the keypad interface,
- the encrypted character sequence is transmitted to the control interface (18) by the data transmission device,
- the card reader controller (12) transfers the encrypted character sequence to the decrypter associated with the card reader (10) for the purpose of decryption,
- the decrypted character sequence is compared with the data, stored on the chip card (11), on a card which is in the card reader (10), and only that result of the check which, in the event of matching data, allows the self-service appliance to be used, but not the decrypted character sequence, is output via the control interface (18).

7. Method according to Claim 4, where the decrypted character sequence is transmitted to a chip card (11), where it is compared with the data stored on the chip card (11).

8. Self-service appliance, particularly an automatic cash dispenser, having
- an input keypad and an input controller which comprises a decrypter and a keypad interface,
- a card reader (10) and a card reader controller (12) which comprises a decrypter and a control interface (18),
- a data transmission device which is used to transmit an output on the keypad interface to the control interface (18),
also containing:
- means which use the encrypter associated with input keypad in order to encrypt a character sequence which is input on the input keypad for the purpose of authorization and output the unencrypted character sequence on the keypad interface,
- the encrypted character sequence is transmitted to the control interface (18) by the data transmission device,
- the card reader controller (12) being set up such that it transfers the encrypted character sequence to the decrypter associated with the card reader (10) for the purpose of decryption so that the decrypted character sequence is compared with the data, stored on the chip card (11), on a card which is the card reader (10), and only that result of the check which, in the event of matching data, allows the self-service appliance to be used, but not the decrypted character sequence, is output via the control interface (18).

## Revendications

1. Procédé pour faire fonctionner un lecteur (10) de cartes qui comporte :
- une commande (12) ayant une interface (18) de commande pour commander le lecteur de cartes de l'extérieur,
- une interface (40) de carte pour des cartes à puce pouvant être remplacées en fonctionnement, qui est reliée à la commande (12),
- un module (20) de sécurité ayant une interface (41) de module qui est reliée à la commande (12),
comprenant les stades :
- une demande d'autorisation entrant par l'interface (18) de commande est envoyée sous la forme de séquences d'instructions au module (20) de sécurité qui en produit un résultat intermédiaire,
- le résultat intermédiaire du module (20) de sécurité est comparé et interprété par l'ordinateur dans la carte à puce au moyen de données transmises par l'interface (40) de carte,
- le résultat de l'interprétation est émis par l'interface (18) de commande et est retraité par la commande (31) supérieure.

2. Procédé suivant la revendication 1, dans lequel l'interface (40) de carte est une interface de carte à puce et effectue le contrôle en constatant le résultat intermédiaire directement à la carte à puce.

3. Procédé suivant la revendication 2, dans lequel un jeu de données est envoyé dans une instruction préalable, par l'intermédiaire de l'interface (18) de commande, à la commande (12) si l'envoi est combiné au résultat intermédiaire du module (20) de sécurité à la carte à puce.

4. Procédé suivant l'une des revendications 1 à 3, dans lequel le module (20) de sécurité déchiffre des données transmises.

5. Lecteur de cartes qui comporte :
- une commande (12) ayant une interface (18) de commande pour commander le lecteur (10) de cartes de l'extérieur,
- une interface (40) de carte pour des cartes (11) à puce pouvant être remplacées en fonctionnement, qui est reliée à la commande (12),
- un module (20) de sécurité ayant une interface (41) de module qui est reliée à la commande (12),
dans lequel le lecteur (10) de cartes comporte en outre :
- des moyens qui envoient une demande d'autorisation arrivant par l'interface (18) de commande sous la forme de séquences d'instructions au module (20) de sécurité qui en produit un résultat intermédiaire,
- des moyens qui transmettent, à des fins de comparaison et d'interprétation, le résultat intermédiaire du module (20) de sécurité au moyen de données transmises par l'interface (40) de carte à puce à l'ordinateur dans la carte (11) à puce,
- des moyens qui émettent le résultat de l'interprétation par l'intermédiaire de l'interface (18) de commande pour retraitement par la commande (31) supérieure.

6. Procédé pour faire fonctionner un appareil de self-service, notamment un distributeur automatique de billets, comprenant :
- un clavier d'entrée et une commande d'entrée qui comprend un chiffreur et une interface de clavier,
- un lecteur (10) de cartes et une commande (12) de lecteur de cartes qui comprend un déchiffreur et une interface (18) de commande,
- un dispositif de transmission de données par lequel une donnée de sortie sur l'interface de clavier est transmise à l'interface (18) de commande,
comportant les stades :
- une succession de signes entrés sur le clavier d'entrée à des fins d'autorisation est chiffrée par le chiffreur appartenant au clavier d'entrée et est contenue dans une donnée de sortie sur l'interface de clavier,
- la succession de signes chiffrés est transmise par le dispositif de transmission de données à l'interface (18) de commande,
- la commande (12) de lecture de carte transmet la succession de signes chiffrés au déchiffreur appartenant au lecteur (10) de cartes en vue du déchiffrage,
- la succession de signes déchiffrés est comparée aux données mémorisées sur la carte (11) à puce d'une carte se trouvant dans le lecteur (10) de cartes et seul le résultat du contrôle, qui permet, s'il y a coïncidence des données, l'utilisation de l'appareil de self-service mais non la succession de signes déchiffrés, est sorti par l'interface (18) de commande.

7. Procédé suivant la revendication 4, dans lequel la succession de signes déchiffrés est transmise sur une carte (11) à puce et y est comparée avec les données mémorisées dans la carte (11) à puce.

8. Appareil de self-service, notamment distributeur automatique de billets comprenant
- un clavier d'entrée et une commande d'entrée qui comprend un déchiffreur et une interface de clavier,
- un lecteur (10) de cartes et une commande (12) de lecteur de cartes qui comprend un déchiffreur et une interface (18) de commande,
- un dispositif de transmission de données par lequel une donnée de sortie sur l'interface de clavier est transmise à l'interface (18) de commande,
comportant en outre :
- des moyens qui chiffrent une succession de signes entrés sur le clavier d'entrée à des fins d'autorisation au moyen du chiffreur appartenant au clavier d'entrée et qui sortent la succession de signes non chiffrés sur l'interface de clavier,
- la succession de signes chiffrés est transmise par le dispositif de transmission de données à l'interface (18) de commande,
- la commande (12) de lecteur de cartes étant telle qu'elle transmet la succession de signes chiffrés au déchiffreur appartenant au lecteur (10) de cartes en vue d'un déchiffrage, afin que la succession de signes déchiffrés soit comparée aux données mémorisées sur la carte (11) à puce d'une carte se trouvant dans le lecteur (10) de cartes et seul le résultat du contrôle, qui permet, s'il y a coïncidence des données, l'utilisation de l'appareil de self-service mais non la succession de signes déchiffrés, est sorti par l'interface (18) de commande.
